# EUROPEAN PATENT APPLICATION

(11) **EP 4 783 301 A1**
(43) Date of publication of application: **29.07.2026**
(21) Application number: 25218502.0
(22) Date of filing: 25.11.2025
(51) Int. Cl.: H01M 10/613, H01M 10/625, H01M 10/647, H01M 10/6557, H01M 10/6567, H01M 50/209, H01M 50/289

(54) **SPACER AND BATTERY PACK INCLUDING THE SAME**

(30) Priority: 24.01.2025 KR 20250011808
(71) Applicant: SAMSUNG SDI CO., LTD., Yongin-si, Gyeonggi-do 17084 (KR)
(72) Inventor: TAEHO, JI, Yongin-si, Gyeonggi-do 17084 (KR); YOONWON, JANG, Yongin-si, Gyeonggi-do 17084 (KR)
(74) Representative: Regimbeau

(57) **Abstract**

A spacer (130) configured to be provided between a pair of adjacent battery cells (110) among two or more battery cells arranged in a preset direction. The spacer (130) includes a spacer body (131) configured to allow a cooling fluid to flow in the spacer body. The spacer body includes opposite surfaces configured to face the pair of adjacent battery cells. The spacer also includes at least one elastic member (133) passing through the opposite surfaces of the spacer body and configured to contact the pair of adjacent battery cells.

## Description

### TECHNICAL FIELD

The disclosure relates to a spacer and a battery pack including the spacer.

### TECHNICAL BACKGROUND

In general, secondary batteries are batteries which are capable of charging and discharging multiple times, and have recently been applied to various technical fields across industries, such as electricity, electronics, communications, or computers.

Secondary batteries are widely used as energy sources for mobile electronic devices, such as digital cameras, cellular phones, or laptop computers, and also attract attention as energy sources for hybrid electric vehicles proposed as a solution to solve air pollution caused by existing gasoline and diesel internal combustion engines which use fossil fuels.

Small mobile electronic devices, such as cellular phones, may operate for a certain period of time with the output and capacity of a single battery. However, in case that long-term driving or high-power driving is required, for example, in case of electric vehicles or hybrid vehicles which consume a lot of power, a module or pack form which includes a plurality of batteries is preferred due to issues with output and capacity, and an output voltage or an output current may be increased according to the number of built-in batteries.

The above information disclosed in this Background section is for enhancement of understanding of the background of the disclosure, and therefore, it may contain information that does not constitute related art.

### SUMMARY

Embodiments provide a battery pack in which a spacer allowing a cooling fluid to flow and having an elastic member is arranged between adjacent battery cells, and thus, a large area between the battery cells is used as a cooling surface and the deformation amount of the battery cells is absorbed by the elastic member, thereby maintaining cooling performance for a prolonged period of time.

The problems to be solved by the disclosure are not limited to those described above, and other problems and advantages of the disclosure that are not described herein will be understood from the following description and will be more clearly understood from embodiments. Furthermore, it will be appreciated that the problems to be solved by the disclosure and the advantages may be realized by the means indicated in the claims and combinations thereof.

The invention relates to a spacer and a battery pack as defined in the appended claims.

According to an embodiment, a spacer, which is configured to be provided between a pair of adjacent battery cells among two or more battery cells arranged in a preset direction, may include a spacer body configured to allow a cooling fluid to flow in the spacer body and including opposite surface configured to face the pair of adjacent battery cells, and at least one elastic member passing through the opposite surfaces of the spacer body and configured to contact with the pair of adjacent battery cells.

In an embodiment, the elastic member may extend at a preset angle with respect to the preset direction in which the battery cells are arranged.

In an embodiment, the spacer may include two or more elastic members, and the elastic members may be spaced apart from each other at preset intervals.

In an embodiment, an area of the elastic member may occupy in a range from approximately 30 % to approximately 40 % of an area of the spacer body.

In an embodiment, the spacer body may have a flow groove which forms a flow path of the cooling fluid.

In an embodiment, the spacer may include two or more flow grooves, and the flow grooves may be on opposite sides of the spacer body.

In an embodiment, the spacer may include a connecting groove on a side of the spacer body to which a neighboring spacer is connectable, and a connecting protrusion on another side of the spacer body which is insertable into another neighboring spacer.

According to an embodiment, a battery pack may include a battery cell assembly including two or more battery cells arranged along a preset direction and two or more spacers each of which is arranged between a pair of adjacent battery cells among the two or more battery cells and having a hollow interior, and a pack housing to which the spacers are connected and which accommodates the battery cells and the spacers, wherein the pack housing may have a cooling passage which communicates with the spacers.

In an embodiment, each of the spacers may include a spacer body connected to the pack housing and having an internal space, and an elastic member passing through the spacer body and configured contact the pair of adjacent battery cells.

In an embodiment, an area of the elastic member may occupy in a range from approximately 30 % to approximately 40 % of an area of the spacer body.

In an embodiment, the elastic member may extend at a preset angle with respect to the present direction in which the battery cells are arranged.

In an embodiment, the spacer may include two or more elastic members, and the elastic members may be spaced apart from each other at preset intervals.

In an embodiment, the spacer may have a flow groove which is connectable to the pack housing and which forms a flow path of a cooling fluid.

In an embodiment, the spacer may include two or more flow grooves, and the flow grooves may be on opposite sides of the spacer body.

In an embodiment, the battery cell assembly may include two or more battery cell assemblies, and the battery cell assemblies may be parallel to each other.

In an embodiment, the spacers provided in the battery cell assemblies may be parallel to each other, a connecting groove to which a neighboring spacer is connectable may be formed on a side of the spacer, and a connecting protrusion which is insertable into a neighboring spacer may be formed on another side of the spacer.

In an embodiment, the pack housing may include a cooling part supporting the battery cell assembly and which has an internal space in which a cooling fluid is flowable, a sidewall part connected to the cooling part and surrounding the battery cell assembly, and a cover part opposite to the cooling part and covering the battery cell assembly.

In an embodiment, the cooling part may have an inlet hole through which the cooling fluid is introduced from an outside and an outlet hole through which the cooling fluid is discharged.

In an embodiment, the cooling part may have a cooling passage which provides a flow path of the cooling fluid introduced from an outside.

In an embodiment, the cooling part may have an engaging protrusion which protrudes in a direction toward the battery cell assembly and is connectable to one of the spacers.

### BRIEF DESCRIPTION OF THE DRAWINGS

The following drawings attached to the present specification illustrate embodiments and help further understand the technical idea of the disclosure together with the detailed description of the disclosure described below. Therefore, the disclosure should not be construed as being limited to only the matters described in these drawings.
FIG. 1 is a perspective view of a battery pack according to an embodiment;
FIG. 2 is an exploded perspective view of the battery pack according to an embodiment;
FIG. 3 is a diagram illustrating a battery cell assembly according to an embodiment;
FIG. 4 is a diagram illustrating a spacer according to an embodiment;
FIGS. 5A-5D are diagrams illustrating a spacer according to other embodiments;
FIG. 6 is a cross-sectional view taken along line I-I' of FIG. 1;
FIG. 7 is an enlarged view of region A of FIG. 6;
FIG. 8 is a diagram illustrating a cooling part according to an embodiment;
FIG. 9 is a diagram illustrating a state in which the spacer is connected to the cooling part, according to an embodiment; and
FIG. 10 is a diagram illustrating a state in which a cooling fluid flows in the spacer and the cooling part, according to an embodiment.

### DETAILED DESCRIPTION

Hereinafter, embodiments will be described in detail with reference to the accompanying drawings. The terms or words used in this specification and the claims should not be construed as being limited to ordinary or dictionary meanings and should be construed as meanings and concepts consistent with the technical idea of the disclosure based on the principle that the inventors may appropriately define the concepts of the terms in order to explain their own invention in the best way. Therefore, the configurations shown in the embodiments and drawings described in this specification are only some of the most preferred embodiments and do not represent all the technical ideas of the disclosure, and it should be understood that various equivalents and modifications may be substituted for them at the time of filing the present application.

In addition, the terms "comprise or include" and/or "comprising or including" as used in the present application specify the presence of the stated figures, numbers, steps, operations, members, elements, and/or groups thereof, but do not preclude the presence or addition of one or more other figures, numbers, steps, operations, members, elements, and/or groups thereof.

In addition, in order to help the understanding of the disclosure, the accompanying drawings are not drawn to scale and the dimensions of some elements may be exaggerated. Furthermore, the same reference numbers may be assigned to the same elements in different embodiments.

The expression that two comparison targets are "the same" means that they are "substantially the same." Therefore, the expression "substantial the same" may include deviations that are considered low in the art, for example, deviations less than 5 %. In addition, the expression that "parameters are uniform over a given region" may mean that parameters are uniform from an average viewpoint.

It will be understood that although "first," "second," etc. may be used herein to describe various elements, these elements should not be limited by these terms. These terms are only used to distinguish one element from another, and it will be understood that a first element may also be a second element unless otherwise specifically stated.

Throughout the specification, each element may be singular or plural unless otherwise specifically stated.

The expression "any configuration is disposed "above (or below)" an element or "on (or under)" an element may mean that any configuration is disposed in contact with the upper surface (or lower surface) of the element, and may also mean that other configurations may be disposed between the element and any configuration disposed on (or under) the element.

It will be understood that when an element is referred to as being "connected to," "coupled to," or "in contact with" another element, the element may be "directly connected to," "directly coupled to," or in direct contact with" the other element, or may be "connected to," "coupled to," or "in contact with" the other element with another element therebetween or through another element. In addition, it will be understood that when a portion is referred to as being "electrically coupled to" another element portion, the portion may be directly coupled to the other portion, or may be coupled to the other portion with an intervening element therebetween.

Throughout the disclosure, the expression "A and/or B" indicates only A, only B, or both A and B unless otherwise stated. As used herein, the term "and/or" includes any and all combinations of one or more of the associated listed items. The expression "C to D" indicates "C or more and D or less" unless otherwise stated.

The terms used in the present specification are for describing embodiments of the disclosure and are not intended to limit the disclosure.

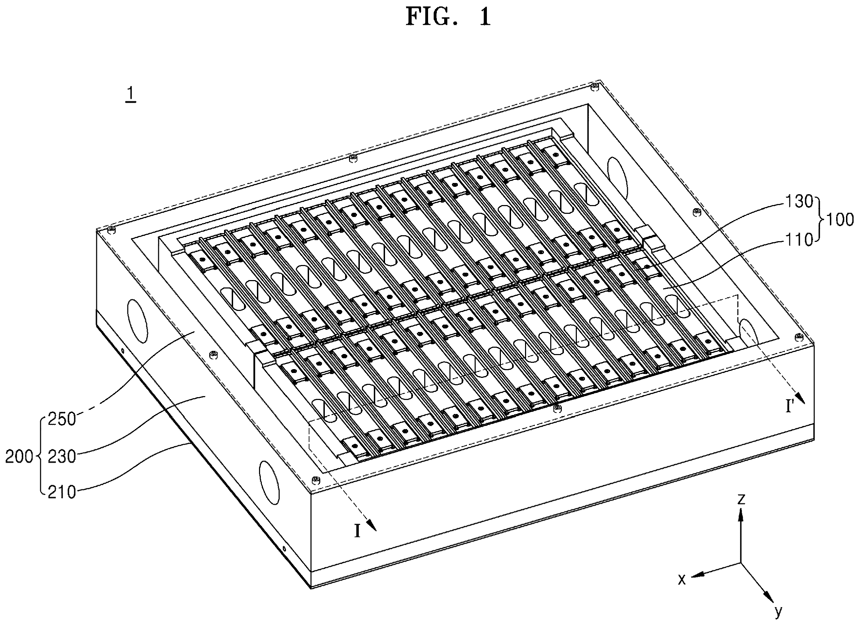

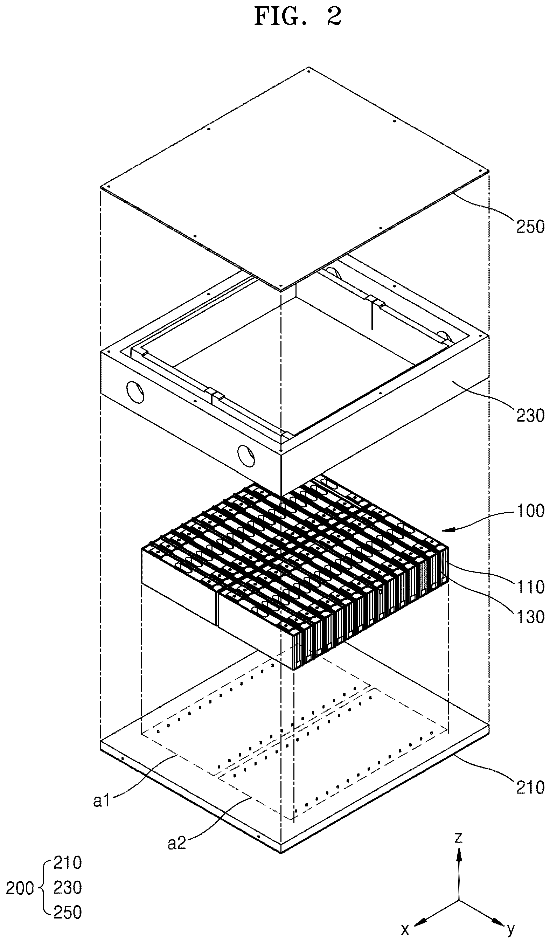

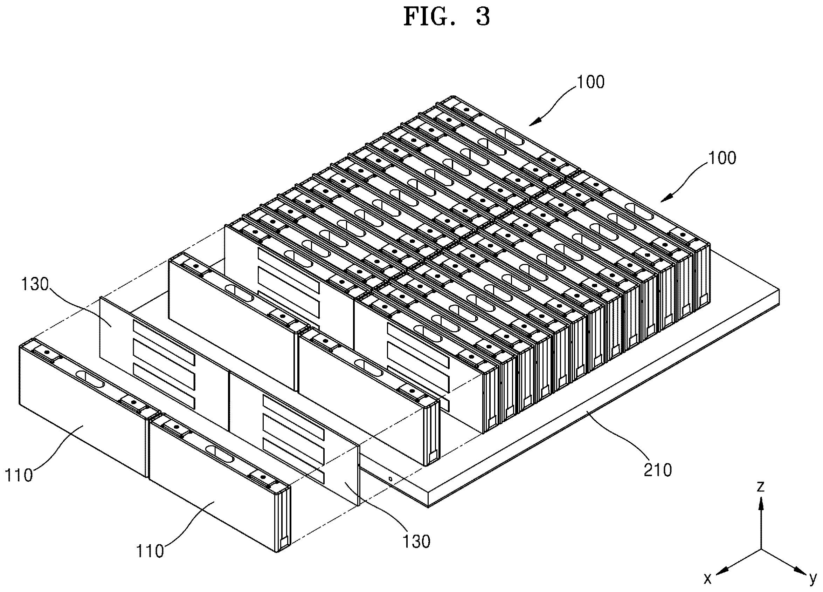

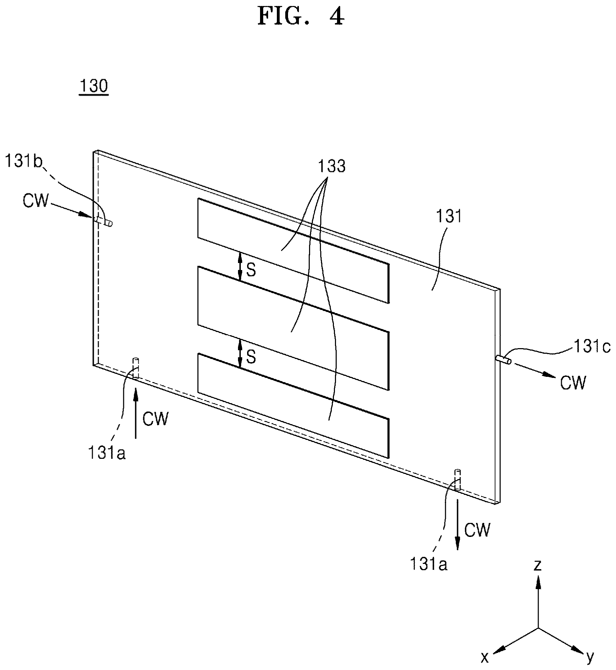

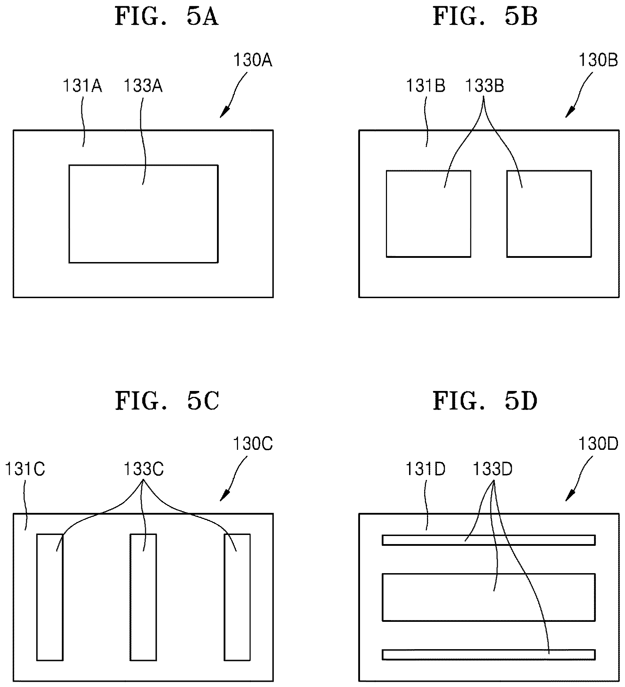

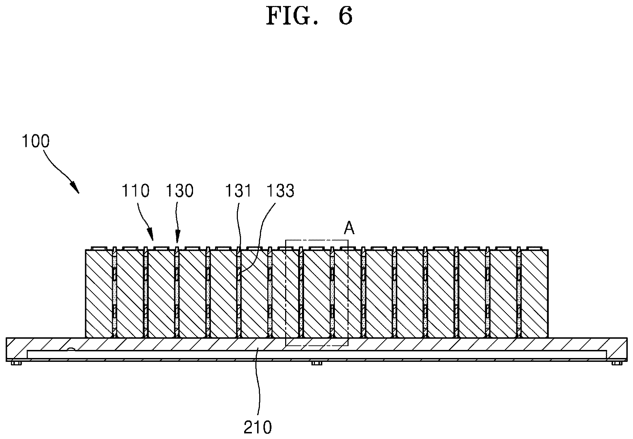

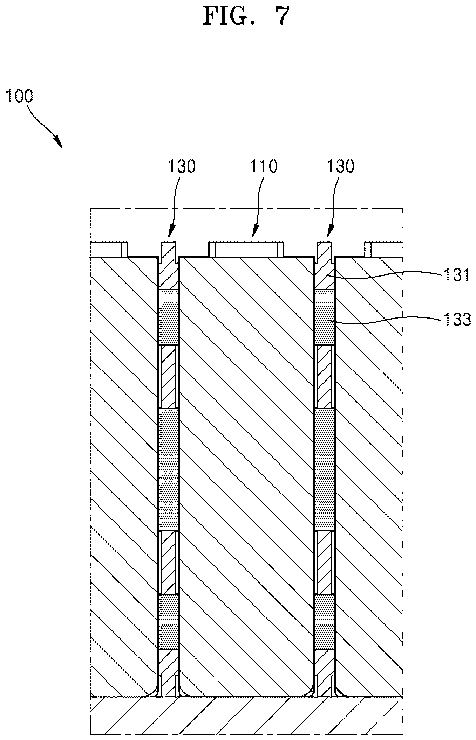

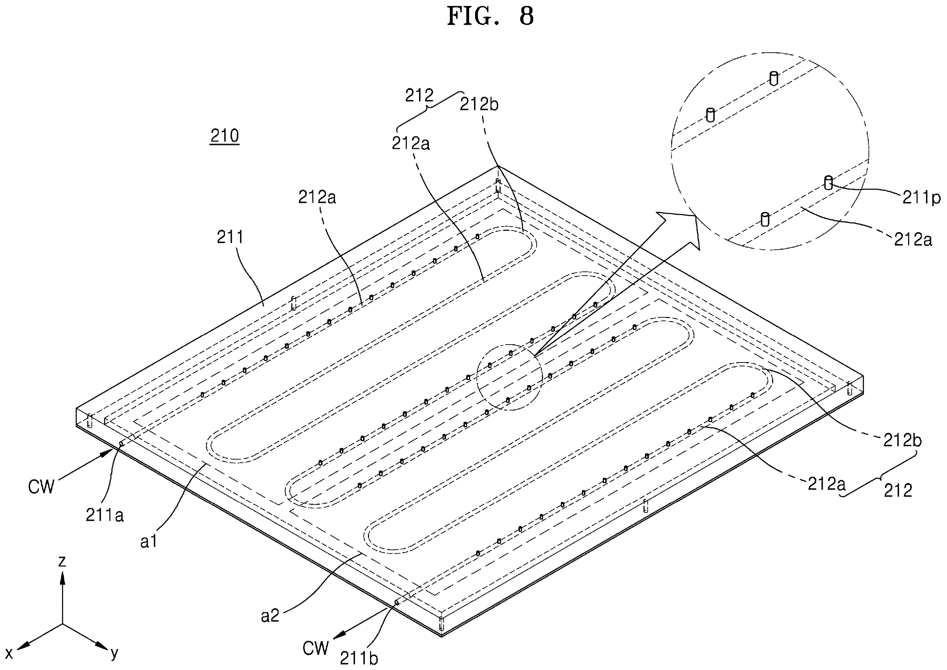

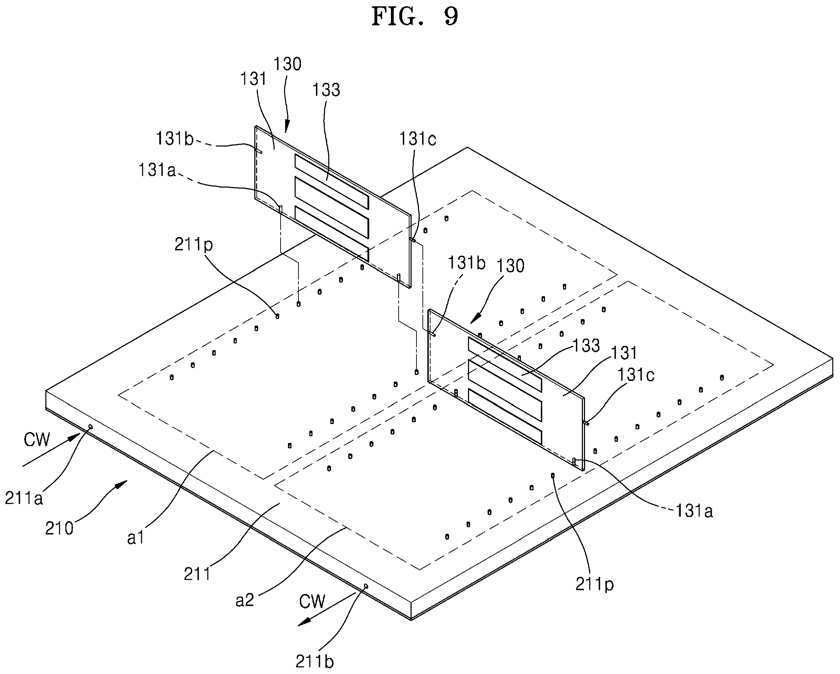

FIG. 1 is a perspective view of a battery pack according to an embodiment. FIG. 2 is an exploded perspective view of the battery pack according to an embodiment. FIG. 3 is a diagram illustrating a battery cell assembly according to an embodiment. FIG. 4 is a diagram illustrating a spacer according to an embodiment. FIGS. 5A-5D are diagrams illustrating a spacer according to other embodiments. FIG. 6 is a cross-sectional view taken along line I-I' of FIG. 1. FIG. 7 is an enlarged view of region A of FIG. 6. FIG. 8 is a diagram illustrating a cooling part according to an embodiment. FIG. 9 is a diagram illustrating a state in which the spacer is connected to the cooling part, according to an embodiment.

Referring to FIGS. 1 and 2, a battery pack 1 according to an embodiment may be mounted on (or in) an electronic device, such as an electric vehicle, and may include a battery cell assembly 100 including a plurality of battery cells 110, and a pack housing 200.

The battery pack 1 may be a battery pack in which the battery cell assembly 100 is mounted on the pack housing 200 and the position of the battery cell assembly 100 is fixed only by an internal structure of the pack housing 200 without a separate structure which restrains the battery cell assembly 100, such as a module. This may simplify the structure of the battery pack 1, may improve space efficiency, and may reduce production costs.

The battery pack 1 may be electrically connected to the electronic device. The battery pack 1 may generate power and supply electrical energy to the electronic device electrically connected to the battery pack 1. This may enable the battery pack 1 to act as a power source for the electronic device.

The battery pack 1 may be mounted on various electronic devices requiring a large amount of power supply and supply power to the various electronic devices. For example, the battery pack 1 may be mounted on electric vehicles, hybrid vehicles, electric motorcycles, or other electronic devices.

Referring to FIGS. 1 to 3, the battery cell assembly 100 may include the plurality of battery cells 110 physically and/or electrically connected to each other and may enhance the structural stability of the battery cells 110 and improve the performance and safety of the battery cells 110 while increasing the voltage and capacity between the battery cells 110.

The battery cell assembly 100 may include the plurality of battery cells 110 and a plurality of spacers 130. Each of the plurality of spacers 130 is between adjacent battery cells 110. In some embodiments, the plurality of battery cells 110 may be connected in series and/or in parallel and arranged in a direction (the x-axis direction in FIG. 1) so that wide surfaces of the neighboring battery cells 110 face each other, and each of the spacers 130 may be arranged between the battery cells 110 facing each other (e.g., adjacent battery cells 110 facing each other).

Referring to FIGS. 1 and 2, the battery pack 1 may include a plurality of the battery cell assemblies 100, and the plurality of battery cell assemblies 100 may be arranged parallel (or substantially parallel) to each other inside the pack housing 200.

In other words, the battery cell assemblies 100 may be arranged along the width direction (the y-axis direction in FIG. 2) of the pack housing 200. In this embodiment, the battery cells 110 and the spacers 130, which are provided in the neighboring battery cell assemblies 100, may also be arranged parallel (or substantially parallel) to each other.

Hereinafter, for convenience of explanation, a region (a left region in FIG. 2) in which one battery cell assembly 100 among the plurality of battery cell assemblies 100 arranged parallel to each other may be defined as a first region a1, and a region (a right region in FIG. 2) in which another battery cell assembly 100 is arranged may be defined as a second region a2.

The battery cell 110 according to an embodiment may be a rechargeable battery and may include at least one electrode assembly and a case in which the at least one electrode assembly is accommodated. The at least one electrode assembly may be provided by winding a positive electrode, a negative electrode, and a separator (an insulator) arranged between the positive electrode and the negative electrode.

The positive electrode and the negative electrode may include a coated portion, which is a region where an active material is applied onto a current collector including a thin metal foil, and an uncoated portion, which is a region where no active material is applied onto the current collector.

The positive electrode and the negative electrode may be wound with the separator (the insulator) arranged between the positive electrode and the negative electrode. However, the disclosure is not limited thereto, and the electrode assembly may have a structure in which the positive electrode and the negative electrode each including a plurality of sheets are alternately stacked with the separator arranged between the positive electrode and the negative electrode.

The case may form the overall exterior of the battery cell 110 and may include a conductive metal, such as aluminum, an aluminum alloy, or nickel-plated steel. In some embodiments, the case may provide a space in which the electrode assembly is accommodated.

Accordingly, the battery cell 110 may store and release energy through a structure including the positive electrode, the negative electrode, the separator, and the case which accommodates the positive electrode, the negative electrode, and the separator.

Referring to FIGS. 1 to 9, each of the spacers 130 may be arranged between adjacent battery cells 110 of the plurality of battery cells 110 and may have a hollow interior. The spacer 130 may include a spacer body 131 and an elastic member 133.

Due to the spacer 130, the neighboring (adjacent) battery cells 110 may be maintained at preset intervals. This may allow heat to be effectively distributed between the battery cells 110, resulting in a reduction in the risk of overheating.

In some embodiments, the spacer 130 may be configured to prevent (or at least mitigate) a short circuit from occurring due to contact between the battery cells 110, which may enhance the electrical stability of the battery cell assembly 100.

Referring to FIG. 9, the spacer 130 may be connected to the pack housing 200 and may be configured to receive a cooling fluid CW from the pack housing 200. The cooling fluid CW may circulate inside the spacer 130 and cool the battery cell 110 by absorbing heat generated from the battery cell 110.

In the present specification, the cooling fluid CW may be cooling water which is introduced into the spacer body 131 and absorbs heat generated from the battery cell 110. However, the disclosure is not limited thereto, and the cooling fluid CW may be provided as various fluids capable of heat transfer, such as ethylene glycol or a cooling oil.

Referring to FIGS. 4 and 9, the spacer body 131 may be connected to the pack housing 200 and may have an internal space (e.g., a cavity). The spacer body 131 may have a preset thickness and may be configured to space the neighboring battery cells 110 apart from each other.

The spacer body 131 according to an embodiment may have a rectangular plate shape and may have a space inside in which the cooling fluid CW is flowable.

The spacer body 131 may include a plastic material, such as polypropylene or polycarbonate. However, the disclosure is not limited thereto, and the spacer body 131 may be formed of any material capable of blocking (or mitigating) heat propagation between the battery cells 110, such as an insulating material having low thermal conductivity (e.g., foam rubber or ceramic).

The spacer body 131 according to an embodiment may have a flow groove 131a to which the pack housing 200 is connectable and which may form a flow path of the cooling fluid CW.

Accordingly, the cooling fluid CW flowing inside the pack housing 200 may be introduced into the spacer body 131 through the flow groove 131a, and the cooling fluid CW may circulate through the internal space of the spacer body 131 and may be then discharged back to the pack housing 200 through another flow groove.

The flow groove 131a may be disposed on a side (a lower side in FIG. 4) of the spacer body 131 and extend along the longitudinal direction. The flow groove 131a may have a shape corresponding to an engaging protrusion 211p of the pack housing 200 described below.

The flow groove 131a may be fitted to the pack housing 200, and thus the spacer 130 may be fixedly positioned inside the pack housing 200. Because the battery cells 110 are arranged on opposite sides of the spacers 130 fixedly positioned in the pack housing 200, the battery cells 110 may be accurately arranged at preset positions.

In some embodiments, even when impact or vibration is applied to the battery pack 1, the battery cells 110 may be protected from external impact, and thus the risk of damage may be reduced. The battery cells 110 may be prevented (or at least mitigated) from shaking or twisting, and thus, the battery cell assembly 100 may maintain a stable state.

In some embodiments, due to the spacers 130 being fixedly positioned in the pack housing 200, the replacement of the battery cells 110 may be easily performed during maintenance of the battery pack 1.

Referring to FIG. 4, the spacer 130 may include a plurality of flow grooves 131a. The plurality of flow grooves 131a may be arranged on respective sides of the spacer 130. For example, the cooling fluid CW introduced into one of the plurality of flow grooves 131a may exchange heat while circulating inside the spacer body 131 and may be then discharged to another flow groove 131a.

Referring to FIG. 4, a connecting groove 131b to which the neighboring spacer 130 is connectable may be formed on a side of the spacer 130, and a connecting protrusion 131c which is insertable into the neighboring spacer 130 may be formed on another side (e.g., the opposite side) of the spacer 130.

The connecting groove 131b may be formed in the form of a groove which is recessed inward from the spacer 130 and extends along the width direction (the y-axis direction in FIG. 4) of the spacer 130.

The connecting protrusion 131c may also extend along the width direction (the y-axis direction in FIG. 4) of the spacer 130 and may have a cylindrical structure with a hollow interior such that an internal space of the spacer body 131 may communicate with an external space of the spacer body 131.

Referring to FIG. 2, in an embodiment in which the battery cell assembly 100 is provided in plurality, the plurality of battery cell assemblies 100 may be arranged parallel (or substantially parallel) to each other. In some embodiments, the spacer 130 included in the battery cell assembly 100 of the first region a1 may be parallel (or substantially parallel) to the spacer 130 included in the battery cell assembly 100 of the second region a2.

Referring to FIG. 9, a plurality of neighboring spacers 130 in the first region a1 and the second region a2 may be connected to each other through the connecting groove 131b and the connecting protrusion 131c.

In some embodiments in which a plurality of battery cell assemblies 100 are parallel (or substantially parallel) to each other, the connecting protrusion 131c formed in the spacer 130 of the first region a1 may face the neighboring connecting groove 131b of the spacer 130 of the second region a2.

According to an embodiment, the circumference of the outer circumferential surface of the connecting protrusion 131c may be equal to or less than the circumference of the inner circumferential surface of the connecting groove 131b. Accordingly, the connecting protrusion 131c formed in the spacer 130 of the first region a1 may be fitted to the neighboring connecting groove 131b formed in the spacer 130 of the second region a2.

In an embodiment in which the plurality of battery cell assemblies 100 are provided, a plurality of spacers 130 included in the respective battery cell assemblies 100 may also be provided and connected to each other. FIG. 3 illustrates an embodiment in which two battery cells assemblies 100 are connected to each other, but in an embodiment in which three or more battery cell assemblies 100 are connected in parallel to each other, three or more spacers 130 may also be connected in parallel along the width direction (the y-axis direction in FIG. 3) of the pack housing 200.

In some embodiments, the connecting protrusion 131c and the connecting groove 131b, which are formed in each of the spacers 130, may be respectively connected to the connecting groove 131b and the connecting protrusion 131c of the neighboring spacer 130, which are arranged on respective (e.g., opposite) sides of the spacer 130.

This may have an effect of constituting a passage which extends along the width direction of the pack housing 200 simply by connection to the neighboring spacer 130 without the need for a separate connecting member.

In some embodiments, the spacer 130 may be configured to receive the cooling fluid CW from the spacer 130 arranged on one side and transfer the cooling fluid CW to the spacer 130 arranged on another side.

Accordingly, the spacer 130 may receive the cooling fluid CW through a passage formed by connection to another spacer 130 without being connected to the pack housing 200 which receives the cooling fluid CW from the outside.

Referring to FIGS. 3 to 7, the elastic member 133 may pass through the spacer body 131 and may contact the neighboring (adjacent) battery cells 110. The elastic member 133 may include an elastically deformable material.

The elastic member 133 may include, for example, rubber, silicone, polyurethane, thermoplastic elastomer, or the like. However, the disclosure is not limited thereto, and the elastic member 133 may pass through the spacer body 131 and may include any suitable material having an elastic restoring force.

As an optional embodiment, the spacer 130 may also be arranged between the pack housing 200 and the battery cell 110. In some embodiments, the elastic member 133 may be arranged in a space between the battery cell assembly 100 and the pack housing 200.

Accordingly, in an embodiment in which the battery cells 110 are stacked, the elastic member 133 may absorb a tolerance between the battery cell assembly 100 and the pack housing 200, and thus, the durability of the battery pack 1 may be improved and the efficiency of the process of assembling the battery pack 1 may be improved.

Referring to FIGS. 6 and 7, the elastic member 133 may be arranged to pass through the spacer body 131 and may contact the battery cells 110 arranged on respective sides (e.g., opposite sides) of the spacer body 131.

Accordingly, in case that a swelling phenomenon occurs while the battery cell 110 repeats charging and discharging, the elastic member 133 may absorb the deformation amount of the battery cell 110 caused by swelling, and thus, damage and structural deformation of the battery cell 110 may be minimized (or at least reduced).

As used herein, the terms "deformation amount of the battery cell 110" refers to the thickness or volume deformation amount of the battery cell 110 caused by swelling.

The area of the elastic member 133 according to an embodiment may be in a range from approximately 30 % to approximately 40 % of the area of the spacer body 131. Accordingly, the non-uniformity of the internal temperature which occurs during rapid charging of the battery cell 110 may be absorbed, and the performance of rapid charging may be maximized (or at least increased).

Generally, due to the charging and discharging of the battery cell 110, a side (an upper side in FIG. 7) of the battery cell 110 where an electrode terminal is arranged may have a relatively higher temperature, and another side (a lower side in FIG. 7) of the battery cell 110 connected to the pack housing 200 may have a relatively lower temperature.

In the battery pack 1 according to an embodiment, because the spacer body 131 arranged between the plurality of battery cells 110 forms a space in which the cooling fluid CW is flowable, the temperature uniformity inside the battery cells 110 may be improved and the elastic member 133 may absorb a swelling force generated in the neighboring (adjacent) battery cells 110. Accordingly, damage to the spacer body 131 may be prevented (or at least mitigated) and cooling performance may be maintained for a long time.

Referring to FIG. 4, the elastic member 133 may extend at a preset angle with respect to a direction in which the plurality of battery cells 110 are arranged.

For example, the elastic member 133 may extend along a direction perpendicular to the direction in which the plurality of battery cells 110 are arranged. The elastic member 133 may extend along the width direction (the y-axis direction in FIG. 4) of the spacer 130.

Because the elastic member 133 extends in the same direction as the width direction of the spacer 130, the cooling fluid CW introduced into the inside of the spacer 130 may flow in the width direction of the spacer 130 along the elastic member 133.

As an optional embodiment, the elastic member 133 may extend along the height direction (the z-axis direction in FIG. 4) of the spacer 130. In this embodiment, the cooling fluid CW may flow along the height direction of the spacer 130.

In one or more embodiments, the spacer 130 may include a plurality of elastic members 133. The plurality of elastic members 133 may be spaced apart from each other at preset intervals (gaps).

Referring to FIG. 4, separation spaces S may be respectively formed between adjacent elastic members 133 that are spaced apart from each other. The separation spaces S may function as passages through which the cooling fluid CW flows.

Accordingly, the cooling fluid CW introduced through the flow groove 131a or the connecting groove 131b may move along the separation space(s) S and may be introduced into the neighboring spacer 130 through the connecting protrusion 131c, or may be discharged to the pack housing 200 through another flow groove 131a.

Referring to FIGS. 5A-5D, the elastic member 133 in the spacer body 131 may have various shapes.

Referring to FIG. 5A, an elastic member 133A may be formed in a rectangular shape. In this embodiment, the cooling fluid introduced from the outside may flow along the periphery (perimeter) of the elastic member 133A. In some embodiments, the cooling fluid may flow along an upper portion (in FIG. 5A) and a lower portion (in FIG. 5A) of the elastic member 133A. The area of the elastic member 133A may be formed to be in a range from approximately 30 % to approximately 40 % of the area of the spacer body 131A.

Referring to FIG. 5B, an elastic member 133B may be formed in a rectangular shape and may be provided in plurality. The plurality of elastic members 133B may be respectively arranged on a left side (in FIG. 5B) and a right side (in FIG. 5B) of the spacer body 131B.

In this embodiment, the cooling fluid introduced from the outside may flow along the peripheries (perimeters) of the plurality of elastic members 133B and may also flow along a space between the elastic members 133B spaced apart from each other.

Referring to FIG. 5C, an elastic member 133C may extend along the height direction (the z-axis direction in FIG. 4) of a spacer 130C. The elastic member 133C extending along the height direction of the spacer 130C may be provided in plurality. The plurality of elastic members 133C may be spaced apart from each other by a gap along the width direction (the y-axis direction in FIG. 4) of the spacer 130C.

The cooling fluid introduced from the outside may flow along a space between the elastic members 133C spaced apart from each other by a gap, and may cool the battery cells 110 through heat exchange with the battery cells 110.

Referring to FIG. 5D, elastic members 133D may extend along the width direction (the y-axis direction in FIG. 4) of a spacer 130D. The elastic members 133D extending along the width direction (the y-axis direction in FIG. 4) of the spacer 130D may be spaced apart from each other by gaps along the height direction (the z-axis direction in FIG. 4) of the spacer 130D.

The elastic members 133D may have different heights (lengths in the z-axis direction in FIG. 4).

In some embodiments, the elastic members 133D arranged on upper and lower sides of a spacer body 131D may have a relatively smaller height, and the elastic member 133D arranged in the center of the spacer body 131D may have a relatively taller height.

However, the disclosure is not limited thereto, and the plurality of elastic members 133 may have the same shape and may be spaced apart from each other on the spacer body 131. In one or more embodiments, some elastic members 133 among the plurality of elastic members 133 may be formed in the same shape and the remaining elastic members 133 may be formed in different shapes. In this manner, various modifications may be made thereto according to the types and characteristics of the battery cells 110.

The cooling fluid introduced from the outside may flow along the upper and lower sides of the respective elastic members 133, and may also flow along the space(s) between the neighboring (adjacent) elastic members 133.

Referring to FIGS. 5A-5D, because the cooling fluid flows along the perimeter (periphery) of the elastic member(s) 133, the flow path of the cooling fluid introduced into the spacer body 131 may also be variously adjusted by adjusting the shape(s) and arrangement(s) of the elastic members 133.

Referring to FIGS. 1, 2, and 8, the pack housing 200 may have a cooling passage 212 connected to the spacer 130 and capable of communicating with the spacer 130 and may accommodate the battery cells 110 and the spacers 130.

The pack housing 200 may form the exterior of the battery pack 1 and may protect the battery cell assembly 100 from external impact, vibration, dust, moisture, etc., and may stably fix the battery cell assembly 100 so that the positions of the battery cells 110 may be maintained to prevent (or at least mitigate) the battery cells 110 from being detached from the battery cell assembly 100.

The pack housing 200 may include various materials. For example, the pack housing 200 may include a metal material, such as aluminum, steel, or nickel-plated steel plate. However, the disclosure is not limited thereto, and various modifications may be made to the material of the pack housing 200 within the technical concept of the disclosure. For example, the pack housing 200 may include a plastic material having electrical insulation and strong durability, such as polycarbonate or polypropylene.

The pack housing 200 according to an embodiment may include a cooling part 210, a sidewall part 230, and a cover part 250.

Referring to FIGS. 1, 2, 8, and 9, the cooling part 210 may support the battery cell assembly 100 and may form an internal space in which the cooling fluid CW is flowable.

An engaging protrusion 211p, which protrudes in a direction toward the battery cell assembly 100 and is connectable to the spacer 130, may be formed on a surface of the cooling part 210.

Referring to FIG. 8, the engaging protrusion 211p may be formed in a cylindrical shape extending along the longitudinal direction (the z-axis direction in FIG. 8). The engaging protrusion 211p may communicate the inside of the cooling part 210 with the outside of the cooling part 210 and may be connected to the spacer 130.

Referring to FIG. 9, the engaging protrusion 211p may be connected to the flow groove 131a of the spacer 130. In some embodiments, the circumference of the outer circumferential surface of the engaging protrusion 211p may be formed to be equal to or less than the circumference of the inner circumferential surface of the flow groove 131a, and the engaging protrusion 211p may be fitted to the flow groove 131a. Due to this, the spacer 130 may be fixedly positioned on the cooling part 210.

The engaging protrusion 211p may form a flow path through which the cooling fluid CW contained inside the cooling part 210 may be introduced into one of the spacers 130.

The cooling fluid CW of the cooling part 210 may be introduced into the spacer 130 through the engaging protrusion 211p connected to the flow groove 131a, and the cooling fluid CW introduced into the spacer 130 may circulate inside the spacer 130 and may cool the battery cells 110 through heat exchange with the battery cells 110.

The heat-exchanged cooling fluid CW may be introduced into another spacer 130 through the connecting protrusion 131c, or may be returned to the cooling part 210 through the other flow groove 131a.

According to an embodiment, the engaging protrusion 211p may be provided in plurality. The plurality of engaging protrusions 211p may be spaced apart from each other along the width direction of the spacer 130, i.e., along the width direction (the y-axis direction in FIG. 9) of the cooling part 210.

A gap between adjacent engaging protrusions 211p, which are spaced apart from each other, may be substantially equal to a gap between the plurality of flow grooves 131a in the spacer 130.

Accordingly, when one spacer 130 is connected to the cooling part 210, the plurality of flow grooves 131a may be respectively connected to the plurality of engaging protrusions 211p, and thus the connecting stability may be improved.

The plurality of engaging protrusions 211p which are connected to the single spacer 130 and spaced apart from each other along the width direction of the cooling part 210 may be defined as a pair of engaging protrusions 211p.

The pair of engaging protrusions 211p may be provided in plurality. The plurality of pairs of engaging protrusions 211p may be spaced apart from each other along the longitudinal direction (the x-axis direction in FIG. 9) of the cooling part 210.

Referring to FIG. 2, the longitudinal direction of the cooling part 210 may be the same direction (the x-axis direction in FIG. 2) as the direction in which the plurality of battery cells 110 are arranged, i.e., the longitudinal direction of the battery cell assembly 100.

Accordingly, the spacers 130 respectively arranged between the plurality of battery cells 110 may also be arranged along the same direction (the x-axis direction), and the spacers 130 may be respectively connected to the pair of engaging protrusions 211p arranged along the longitudinal direction of the cooling part 210.

In an embodiment in which the plurality of battery cell assemblies 100 are respectively disposed in the first region a1 and the second region a2, the engaging protrusions 211p may also be formed to be respectively connected to the battery cell assemblies 100. In some embodiments, the plurality of engaging protrusions 211p may be respectively disposed in the first region a1 and the second region a2 along the longitudinal direction of the battery cell assembly 100.

Referring to FIG. 8, the cooling part 210 may include a cooling body 211. The cooling body 211 may be formed in a rectangular plate shape with a hollow interior, and the cooling fluid CW may be contained (accommodated) inside the cooling body 211.

In some embodiments, the cooling part 210 may have an inlet hole 211a through which the cooling fluid CW may be introduced from the outside and an outlet hole 211b through which the cooling fluid CW may be discharged. The inlet hole 211a and the outlet hole 211b may be formed in the same surface of the cooling body 211, but the disclosure is not limited thereto, and the inlet hole 211a and the outlet hole 211b may be respectively formed on one surface of the cooling body 211 and another surface (e.g., an opposite surface) of the cooling body 211.

A cooling passage 212 which provides the flow path of the cooling fluid CW introduced from the outside may be formed in the cooling part 210.

According to an embodiment, the inlet hole 211a may be connected to a side of the cooling passage 212, and the outlet hole 211b may be connected to another side (e.g., an opposite side) of the cooling passage 212. Accordingly, the cooling fluid CW introduced from the outside may be introduced into the cooling passage 212 through the inlet hole 211a and discharged through the outlet hole 211b.

The cooling passage 212 according to an embodiment may include a passage part 212a and a connection part 212b.

Referring to FIG. 8, the cooling passage 212 may have a structure in which a plurality of passage parts 212a arranged parallel to each other at preset intervals are connected (e.g., an undulating or sinewave shape configuration). The passage part 212a may have a groove or hole shape having a preset diameter and extending along the longitudinal direction (the x-axis direction in FIG. 8) of the cooling part 210.

The passage part 212a may be provided in plurality. The plurality of passage parts 212a may be spaced apart from each other along the width direction (the y-axis direction in FIG. 8) of the cooling part 210. As an optional embodiment, the plurality of passage parts 212a may be arranged in parallel (or substantially in parallel).

Referring to FIG. 8, the plurality of different passage parts 212a may be connected to each other by a plurality of the connection parts 212b. The connection part 212b may have a preset radius of curvature and may be formed in a curved shape to connect the plurality of different passage parts 212a arranged parallel to each other.

Due to this, the cooling passage 212 may have a shape in which roughly S-shaped curves are continuously connected.

The cooling fluid CW having passed through one of the passage parts 212a may change direction while passing through the connection part 212b and pass through another passage part 212a, and then change direction while passing through another connection part 212b.

Accordingly, the cooling fluid CW may remain in the cooling passage 212 for a relatively long time, and may be introduced into the spacers 130 through the cooling passage 212 to efficiently cool the battery cells 110.

Referring to FIG. 8, the engaging protrusion 211p may be formed on a side of a surface (an upper surface in FIG. 8) of the cooling body 211, and the cooling passage 212 may be formed on another side opposite to the side of the surface of the cooling body 211 (e.g., the engaging protrusions 211p and the cooling passage 212 may be on opposite surfaces of the cooling body 211).

In some embodiments, the path formed by the plurality of engaging protrusions 211p disposed along the longitudinal direction (the x-axis in FIG. 8) of the cooling part 210 in the first region a1 may correspond to the path of the cooling passage 212.

The engaging protrusion 211p may correspond to the flow groove 131a, and the path of the cooling passage 212 may be formed to correspond to the arrangement path of the battery cells 110 arranged in the first region a1.

The path formed by the plurality of engaging protrusions 211p arranged in the second region a2 may also be formed to correspond to the arrangement path of the battery cells 110 arranged in the second region a2.

Accordingly, the cooling fluid CW flowing through the cooling passage 212 may pass through the engaging protrusion 211p, which communicates the inside of the cooling body 211 with the outside of the cooling body 211 and is connected to the spacer 130, and may be then introduced into the spacers 130.

The cooling fluid CW which has completed heat exchange while passing through the spacers 130 may also be readily discharged into the cooling part 210.

Referring to FIGS. 1 and 2, the sidewall part 230 may be connected to the cooling part 210 and arranged to surround the battery cell assembly 100. The sidewall part 230 may have an internal space in which the battery cell assembly 100 may be accommodated.

A surface (a bottom surface in FIG. 2) of the sidewall part 230 facing the cooling part 210 may be formed in a shape corresponding to the periphery (perimeter) of the cooling part 210. In some embodiments in which the cooling part 210 is formed in a rectangular plate shape, the sidewall part 230 may also be formed in a rectangular parallelepiped shape with upper and lower surfaces (upper and lower surfaces in FIG. 2) open.

The sidewall part 230 according to an embodiment may cover side surfaces of the plurality of battery cells 110 not facing the spacers 130 and respective ends of the battery cell assembly 100.

Referring to FIGS. 1 and 2, the cover part 250 may be opposite the cooling part 210 and may cover the battery cell assembly 100. Accordingly, the cover part 250 may protect the battery cell assembly 100 from an external environment and contaminants.

The cover part 250 according to an embodiment may be formed in a shape corresponding to the cooling part 210. In some embodiments, the cover part 250 may be arranged on a side (an upper side in FIG. 2) of the sidewall part 230 having a rectangular cross-section, and the cooling part 210 may be arranged on another side (a lower side in FIG. 2) of the sidewall part 230. Accordingly, the cover part 250 and the cooling part 210 may together form a rectangular parallelepiped shape.

Hereinafter, the operating principle and effects of the battery pack 1 according to an embodiment are described.

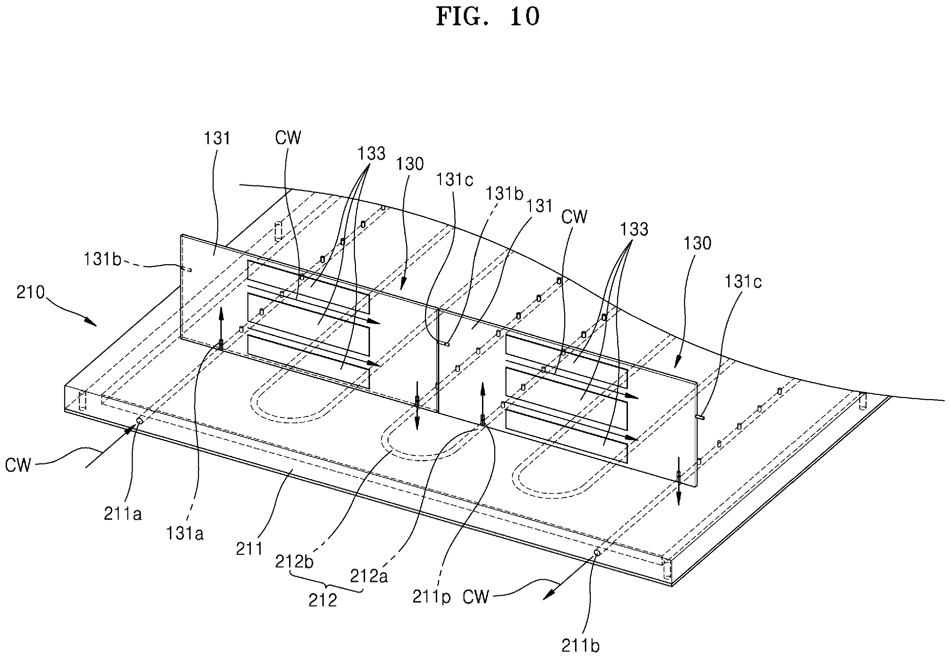

FIG. 10 is a diagram illustrating a state in which the cooling fluid CW flows in the spacers 130 and the cooling part 210, according to an embodiment.

Referring to FIGS. 1 to 10, the battery pack 1 may include the battery cell assembly 100 and the pack housing 200.

The battery cell assembly 100 may include the plurality of battery cells 110 arranged in a preset direction and a spacer 130 arranged between each adjacent pair of the plurality of battery cells 110.

The spacer 130 may maintain a gap between the battery cells 110 and may be formed so that the cooling fluid CW may flow inside the spacer 130. The spacer 130 may be connected to the pack housing 200. In some embodiments, the engaging protrusion 211p of the cooling part 210 may be fitted to the flow groove 131a of the spacer 130 such that the spacer 130 may be fixedly positioned in the cooling part 210.

Referring to FIG. 10, the cooling fluid CW may be introduced into the inlet hole 211a of the cooling body 211.

The cooling fluid CW may be supplied to the inlet hole 211a from a separate cooling fluid supply source outside of the battery pack 1. The cooling fluid CW may flow along the cooling passage 212, and a portion of the flowing cooling fluid CW may be introduced into the spacers 130 through the engaging protrusions 211p.

The cooling fluid CW introduced into the spacers 130 may exchange heat with the neighboring battery cells 110 while circulating inside the spacer body 131 along the path formed by the elastic member(s) 133. The heat-exchanged cooling fluid CW may pass through the flow groove 131a and the engaging protrusion 211p again, may be introduced into the cooling passage 212, and may flow back into the cooling part 210.

A portion of the cooling fluid CW introduced into one of the spacers 130 may be introduced into the neighboring spacer 130 through the connecting protrusion 131c.

The cooling fluid CW introduced into the neighboring spacer 130 may circulate inside the spacer body 131, may be re-introduced into the cooling part 210 through the flow groove 131a, or may be introduced into another neighboring spacer 130 through the connecting protrusion 131c.

In some embodiments, the cooling fluid CW flowing through the cooling part 210 may be introduced into the spacer 130 to cool the battery cells 110 and then re-supplied to the cooling part 210, or may be introduced into the spacer 130 of the battery cell assembly 100 in another region to additionally cool the battery cells 110.

Referring to FIG. 7, the elastic member 133 may be configured to pass through the spacer body 131. The elastic member 133 may come into contact with the battery cells 110 arranged on opposite sides of the spacer 130 and may absorb the volume deformation amount caused by swelling of the battery cells 110.

A related art method of cooling the battery cells 110 by using a large area between the battery cells 110 has a problem in that the cooling performance deteriorates over time due to swelling of the battery cells 110.

In contrast, in the battery pack 1 according to an embodiment, the spacer 130 may cool the plurality of battery cells 110 by using a large area between the battery cells 110 as a cooling area, and the elastic member 133 may be arranged in the spacer body 131 to absorb the deformation amount of the battery cells 110 caused by swelling, and thus damage to the spacer 130 may be minimized, thereby maintaining cooling performance for a prolonged period of time.

In some embodiments, by adjusting the areas of the spacer body 131 and the elastic member 133 to a preset ratio, the temperature uniformity inside the battery cells 110 may be improved and the reliability of the battery pack 1 may be improved.

In some embodiments, because the spacer 130 and the cooling part 210 or the spacer 130 and another neighboring spacer 130 are readily connected to each other without a separate connecting member, the assembly time of the battery pack 1 may be reduced and the production efficiency may be improved.

However, the effects that may be obtained through the disclosure are not limited to those described above, and other technical effects that are not described herein will be clearly understood from the description of the disclosure by those of ordinary skill in the art.

Although the disclosure has been described with reference to the limited embodiments and drawings, the disclosure is not limited thereto, and various modifications and variations are possible by those of ordinary skill in the art within the scope of the technical idea of the disclosure and the scope of the claims to be described below.

## Claims

1. A spacer (130) configured to be provided between a pair of adjacent battery cells (110) of a plurality of battery cells arranged in a preset direction, the spacer comprising:
a spacer body (131) configured to allow a cooling fluid (CW) to flow in the spacer body, the spacer body comprising opposite surfaces configured to face the pair of adjacent battery cells; and
at least one elastic member (133) passing through the opposite surfaces of the spacer body (131) and configured to contact the pair of adjacent battery cells (110).

2. **The** spacer of claim 1, wherein the at least one elastic member (133) extends at a preset angle with respect to the preset direction in which the plurality of battery cells (110) is arranged.

3. **The** spacer of claim 1 or claim 2, wherein the at least one elastic member (133) comprises a plurality of elastic members, and wherein the plurality of elastic members is spaced apart from each other at preset intervals.

4. **The** spacer of any one of claims 1 to 3, wherein an area of the at least one elastic member (133) occupies in a range from approximately 30 % to approximately 40 % of an area of the spacer body (131).

5. **The** spacer of any one of claims 1 to 4, further comprising:
a connecting groove (131b) on a side of the spacer body (131), the connecting groove being configured to connect to a neighboring spacer (130), and
a connecting protrusion (131c) on another side of the spacer body (131), the connecting protrusion being insertable into another neighboring spacer (130).

6. A battery pack (1) comprising:
at least one battery cell assembly (100) comprising a plurality of battery cells (110) arranged along a preset direction and a plurality of spacers (130) according to any one of claims 1 to 5, each spacer of the plurality of spacers being between a pair of adjacent battery cells of the plurality of battery cells and having a hollow interior; and
a pack housing (200) accommodating the plurality of battery cells (110) and the plurality of spacers (130),
wherein the plurality of spacers (130) is connected to the pack housing (200), and
wherein the pack housing (200) comprises a cooling passage in communication with the plurality of spacers (130).

7. **The** battery pack of claim 6, wherein the at least one battery cell assembly (100) comprises a plurality of battery cell assemblies, and the plurality of battery cell assemblies is substantially parallel to each other.

8. **The** battery pack of claim 7 in combination with claim 5, wherein the plurality of spacers (130) in the plurality of battery cell assemblies (100) is arranged substantially parallel to each other,
wherein the connecting groove (131b) of each spacer is connected to a neighboring spacer, and
wherein the connecting protrusion (131c) of each spacer is inserted into another neighboring spacer.

9. **The** battery pack of any one of claims 6 to 8, wherein the pack housing comprises:
a cooling part (210) supporting the at least one battery cell assembly (100), the cooling part comprising an internal space in which a cooling fluid (CW) is flowable;
a sidewall part (230) connected to the cooling part (210) and surrounding the at least one battery cell assembly (100); and
a cover part (250) opposite to the cooling part (210) and covering the at least one battery cell assembly (100).

10. **The** battery pack of claim 9, wherein the cooling part (210) comprises an inlet hole (211a) through which the cooling fluid (CW) is introduced from an outside and an outlet hole (211b) through which the cooling fluid (CW) is discharged.

11. **The** battery pack of claim 10, wherein the cooling part (210) comprises a cooling passage (212) providing a flow path of the cooling fluid (CW) introduced from an outside.

12. **The** battery pack of any one of claims 9 to 11, wherein the cooling part (210) comprises an engaging protrusion (211p) protruding in a direction toward the at least one battery cell assembly (100), the engaging protrusion (211p) being connected to a spacer of the plurality of spacers (130).
